Europäisches Patentamt

European Patent Office

Office européen des brevets

(11) Publication number: 0 340 664
A2

# (12) EUROPEAN PATENT APPLICATION

(21) Application number: 89107759.6

(22) Date of filing: 28.04.89

(51) Int. Cl.4: G06F 3/14 , G09G 1/28 , G09G 3/20

(30) Priority: 30.04.88 JP 108466/88

(43) Date of publication of application:
08.11.89 Bulletin 89/45

(84) Designated Contracting States:
DE FR GB

(71) Applicant: KABUSHIKI KAISHA TOSHIBA
72, Horikawa-cho Saiwai-ku
Kawasaki-shi Kanagawa-ken 210(JP)

(72) Inventor: Arai, Makoto c/o Intellectual
Property Division
K.K. Toshiba, 1-1 Shibaura 1-chome
Minato-ku
Tokyo 105(JP)

(74) Representative: Lehn, Werner, Dipl.-Ing. et al
Hoffmann, Eitle & Partner Patentanwälte
Arabellastrasse 4
D-8000 München 81(DE)

(54) Method and system for setting palette data by a display mode.

(57) In a display system, mode data representing a display mode written in a mode register (41) is also written into a buffer (44). An I/O decoder (42) checks whether or not the mode data is written into the mode register (41) and outputs an interruption command signal to an interrupt controller (5) when the mode data is written into the mode register (41). The interrupt controller (5) performs an interruption to a CPU (1) in accordance with the interruption command signal. By so doing, the CPU (1) starts a BIOS (2). The BIOS (2) reads the mode data from the buffer (44) and sets palette data in a palette register (43) in accordance with the mode data. In this way, the palette data can readily be set to the palette register (43) for each display mode.

F I G. 1

## Method and system for setting palette data by a display mode

The present invention relates to a method and system for setting palette data by a display mode.

A lap-top type personal computer has recently been employed in place of a conventional desk-top type personal computer, because it is smaller in size, lighter in weight and portable.

The lap-top type personal computer usually has, as a display device, a flat panel display such as a plasma display and light crystal display (LCD) and performs a "gradation" display, in place of a color display, by data (hereinafter referred to as palette data) which is stored in a palette register in a display controller. The palette data is different from data for ordinary color CRTs (cathode ray tubes). The palette data also differs depending upon a display mode, such as a text mode and graphics mode. The selection of the display mode is achieved by data which is written in a mode register in the display controller.

An ordinary application program is prepared for color CRTs and selects the display mode by direct access to the mode register. If, however, the application program is applied to the display device such as the plasma display, the palette data for the plasma display has to be set in the palette register for each display mode, requiring a dedicated hardware. For this reason, the hardware configuration becomes complex and a resultant system will be more expensive.

There is a growing desire for a system which can set palette data by a display mode in a simpler manner.

It is accordingly the object of the present invention to provide a method and system for setting palette data in a display mode.

According to one aspect of the present invention, there is provided a display system comprising: a main processor; a plurality of display devices for displaying display data; mode data storing means for storing mode data representing a display mode of the display device; buffer means for storing the mode data; determining means for determining whether or not the mode data is stored in the mode data storing means; interruption means for generating an interruption for the main processor in accordance with a determination result provided by the determining means; display control means for generating palette data in accordance with the mode data stored in the buffer means when the interruption is generated; and palette register means for storing the generated palette data.

According to another aspect of the present invention, there is provided a method for setting palette data by a display mode of display device, the method comprising the steps of: checking a writing of mode data representing the display mode of the display device; generating an interruption in accordance with a checking result; and setting palette data in accordance with the mode data when the interruption is generated.

This invention can be more fully understood from the following detailed description when taken in conjunction with the accompanying drawings, in which:

Fig. 1 is a block diagram showing an arrangement of a display system according to an embodiment of the present invention;

Fig. 2 is a block diagram for explaining the operation of the display system; and

Fig. 3 is a flowchart showing the operation of the display system.

A display system of the present invention will be explained below with reference to the accompanying drawings.

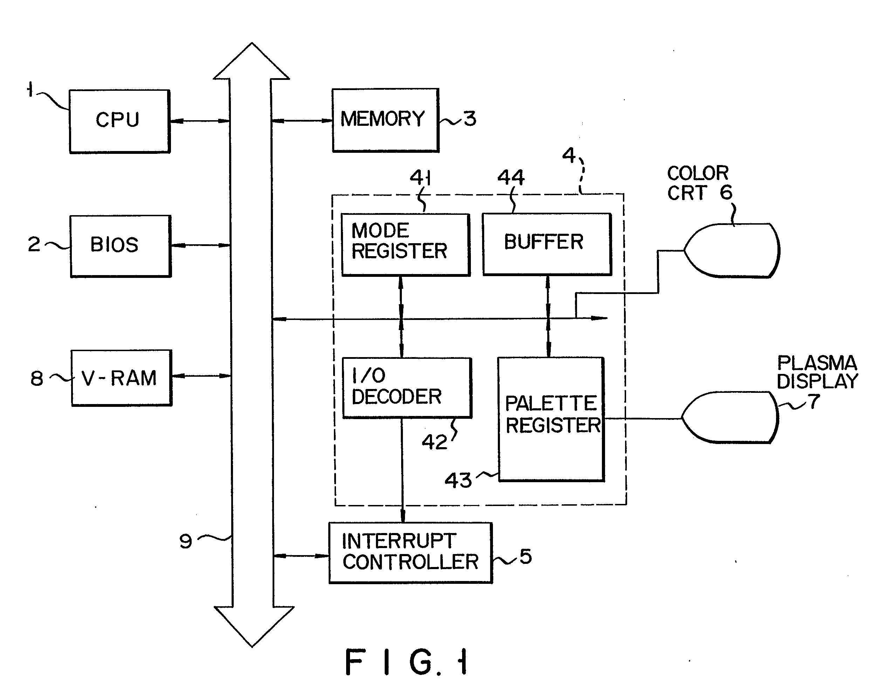

In Fig. 1, the present display system comprises a CPU (central processing unit) 1, a BIOS (basic input and output system) 2, a memory 3, a display controller 4, an interrupt controller 5, a color CRT 6, a plasma display 7, a V-RAM (video-random access memory) 8, and a system bus 9.

The CPU 1 controls respective constituent elements of the present display system. The BIOS 2 is a display control program for controlling the display controller 4 and V-RAM 8 under control of the CPU 1 and sets palette data relative to a palette register 43.

The color CRT 6 can display a plurality of colors, and the plasma display 7 cannot perform color display but can perform gradation display.

The display controller 4 for controlling the color CRT 6 and plasma display 7 comprises a mode register 41, and I/O decoder 42, the palette register 43 and a buffer 44.

The mode register 41 stores mode data representing a display mode, and the buffer 44 stores the same data as the mode data stored in the mode register 41. The mode register 41 allows write operation but does not allows read operation. The buffer 44 allows read/write operation. The I/O decoder 42 checks whether or not the mode data is written into the mode register 41, and outputs an interruption command signal to the interrupt controller 5 upon receipt of the mode data. The palette register 43 stores palette data for determining a gradation.

The interrupt controller 5 performs an interruption to the CPU 1 in accordance with an interruption command signal output from the I/O decoder 42.

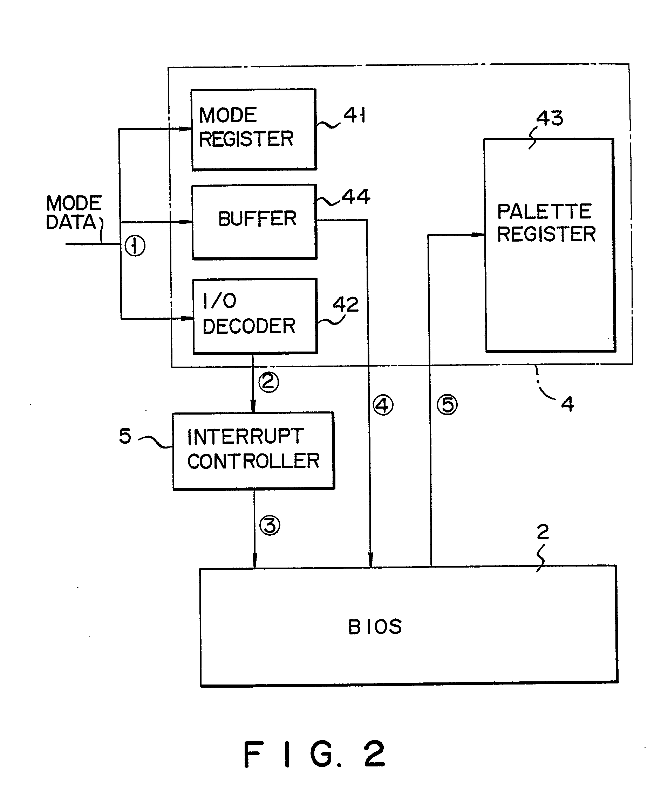

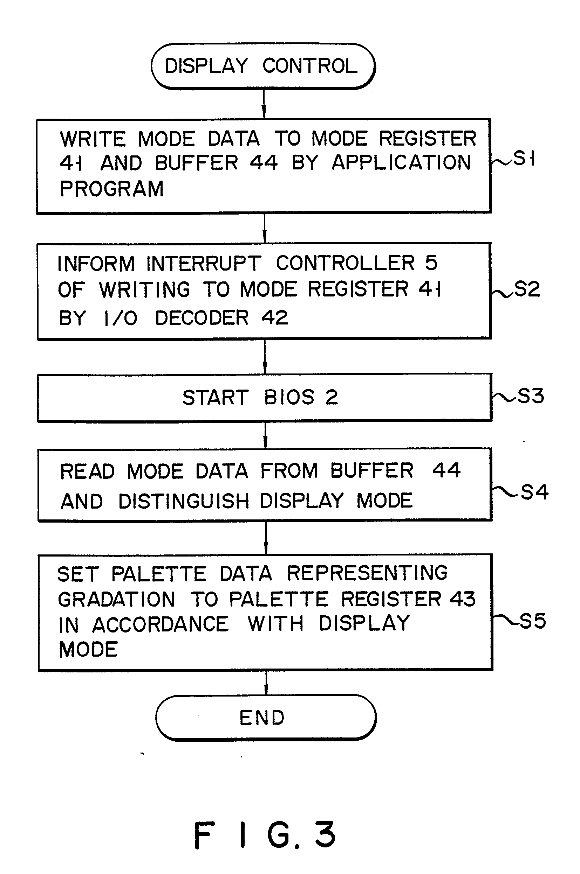

The function of the present display system will be explained below with reference to Figs. 2 and 3.

The operations ① to ⑤ correspond to steps S1 to S5 in Fig. 3.

For display mode selection, at step S1, the mode data is written into the mode register 41 by an ordinary application program. The same data as the mode data written into the mode register 41 is also written into the buffer 44. Here, if mode data representing a display mode of the color CRT is written into the mode register 41, color display data stored in the V-RAM 8 is displayed on the color CRT 6. If, on the other hand, mode data representing the display mode of the plasma display is written into the mode register 41, then an operation following step S1 is carried out.

At step S2, the I/O decoder 42 checks whether or not the mode data is written into the mode register 41, and outputs an interruption command signal to the interrupt controller 5 when the mode data is written into the mode register 41. In accordance with the interruption command signal the interrupt controller 5 informs the CPU 1 of a generation of an interruption. The BIOS 2 starts at step S3. In this connection it is to be noted that an start setting is needed for the BIOS 2 to be started with the aforementioned sequence.

At step S4, the BIOS 2 reads out the mode data stored in the buffer 44 and identifies a display mode in accordance with the mode data. At step S5, the BIOS 2 stores palette data into the palette register 43 in accordance with the identified display mode. Color display data stored in the V-RAM 8 is displayed on the plasma display 7 in accordance with the gradation of the palette data which is set to the palette register 43.

As set forth above, the palette data can readily set the palette register for each display mode.

Although, in the aforementioned embodiment, the setting of the palette data has been explained, the same processing can be performed in the setting of a display timing, etc.

Although the present invention has been explained in connection with the aforementioned embodiment, it is not restricted to the aforementioned embodiment. Various changes or modifications may be made within the spirit and scope of the present invention.

## Claims

1. A display system characterized by:
a main processor (1);
a plurality of display devices (6, 7) for displaying display data;
mode data storing means (41) for storing mode data representing a display mode of the display device;
buffer means (44) for storing the mode data;
determining means (42) for determining whether or not the mode data is stored in the mode data storing means (41);
interruption means (5) for generating an interruption for the main processor (1) in accordance with a determination result provided by the determining means (42);
display control means (2) for generating palette data in accordance with the mode data stored in the buffer means (44) when the interruption is generated; and
palette register means (43) for storing the generated palette data,
wherein the display data is displayed in accordance with the palette data.

2. The system according to claim 1, characterized in that the display devices (6, 7) include a plasma display.

3. A display system characterized by:
a main processor (1);
a plurality of display devices (6, 7) for displaying display data;
storing means (44) for storing mode data representing a display mode of the display device;
determining means (42) for determining whether or not the mode data is stored in the storing means (44);
interruption means (5) for generating an interruption for the main processor (1) in accordance with a determination result provided by the determining means (42); and
display control means (2) for generating palette data in accordance with the mode data stored in the buffer means when the interruption is generated,
wherein the display data is displayed in accordance with the palette data.

4. The system according to claim 3, characterized in that the display devices (6, 7) include a plasma display.

5. A method for setting palette data by a display mode of display device, characterized by the steps of:
checking a writing of mode data representing the display mode of the display device;
generating an interruption in accordance with a checking result; and
setting palette data in accordance with the mode data when the interruption is generated.

6. The method according to claim 5, further characterized by the step of displaying display data in accordance with the set palette data.

F I G. 1

MODE
REGISTER ～41

BUFFER ～44

43

PALETTE
REGISTER

MODE
DATA ) ①

I/O
DECODER ～42

②

4

INTERRUPT
CONTROLLER

5 ～

④ ⑤

③

2

B IOS

F I G. 2

DISPLAY CONTROL

WRITE MODE DATA TO MODE REGISTER 41 AND BUFFER 44 BY APPLICATION PROGRAM ~S1

INFORM INTERRUPT CONTROLLER 5 OF WRITING TO MODE REGISTER 41 BY I/O DECODER 42 ~S2

START BIOS 2 ~S3

READ MODE DATA FROM BUFFER 44 AND DISTINGUISH DISPLAY MODE ~S4

SET PALETTE DATA REPRESENTING GRADATION TO PALETTE REGISTER 43 IN ACCORDANCE WITH DISPLAY MODE ~S5

END

# F I G. 3